# EUROPEAN PATENT APPLICATION

(11) **EP 2 485 181 A1**
(43) Date of publication of application: **08.08.2012**
(21) Application number: 11153090.3
(22) Date of filing: 02.02.2011
(51) Int. Cl.: G06Q 10/00, H04L 29/08

(54) **Communication device and method for determining and processing contact profiles**

(71) Applicant: Research In Motion Limited, Waterloo, ON N2L 3W8 (CA)
(72) Inventor: Deluca, Michael, Joseph, Rolling Meadows, IL 60008 (US)
(74) Representative: MERH-IP Matias Erny Reichl Hoffmann

(57) **Abstract**

The present specification provides communication device for determining and processing contact profiles. The contact profiles can be used in the composition of messages in order to reduce the likelihood of multiple clarification messages being sent and to thereby reduce processing and bandwidth resources in management of the communications. The communication may be based on electronic mail or instant messaging.

## Description

### FIELD

The present specification relates generally to communication devices and more specifically relates to a communication device for determining and processing contact profiles.

### BACKGROUND

Written electronic are now a dominant form of communicating messages. Communication devices are used to create, modify, and send such messages. Communication devices can also be used to receive and reply to such messages. It can be noted that certain originating messages can result in a plurality of reply messages, thereby consuming processing, memory and bandwidth resources.

### SUMMARY

An aspect of this specification provides a method for performing message analytics upon at least a portion of a first message composed at a first communication device comprising:

receiving a contact identifier from said message;

loading a contact profile for said contact identifier;

analyzing said message to generate message profile for said message;

comparing said message profile to said contact profile;

generating an indication of the result of said comparison.

The method can further comprise receiving at least one additional contact identifier from said message and loading an additional contact profile for each at least one additional contact identifier and generating an aggregate contact profile based on said contact profiles, and wherein said comparing step is based on said aggregate contact profile.

The analyzing can comprise an analytic algorithm.

The analyzing can comprise an analytic algorithm comprising at least one of language, message length, word length, character length, sentence length, grammar usage, punctuation usage, character-style, formality, number of messages in a thread, distribution list, and psychometrics.

The first message can be any one of an email, a text message, an instant message, or a messaging service within a social media application.

The indication can comprise an indication of a degree of match resulting from said comparison. The method can further comprise refusing to send said message if said degree of match does not meet a predefined threshold.

The method can further comprise generating proposed revisions to said message based on said comparison and wherein said indication includes said proposed revisions.

The indication can provide a contact profile summary.

The method can further comprise displaying said contact profile in conjunction with said message.

Another aspect of this specification provides a non-transitory computer readable medium for storing a plurality of programming instructions executable on a said first communication device according to any of the foregoing.

The first communication device can be an electronic device.

The first communication device can be a server that forwards said message to a destination electronic device.

Another aspect of this specification provides an electronic communication device according to any of the foregoing.

Another aspect of this specification provides a server according to any of the foregoing.

### BRIEF DESCRIPTION OF THE DRAWINGS

Figure 1 is a schematic representation of a front view of a portable electronic device.

Figure 2 is a block diagram of the electronic components of the device shown in Figures 1.

Figure 3 is a block diagram of a system for communicating messages.

Figure 4 is a flow chart depicting a method for communicating messages.

Figure 5 is a flow chart depicting a non-limiting example of how certain aspects of the method of Figure 4 can be implemented.

Figure 6 shows a non-limiting example of a message that can be received at block 405 in the method of Figure 4.

Figure 7 shows another non-limiting example of a message that can be received at block 405 in the method of Figure 4.

Figure 8 shows another non-limiting example of a message that can be received at block 405 in the method of Figure 4.

Figure 9 shows a flow chart depicting a method for managing messages.

Figure 10 shows an example of a compose-message dialogue box that can be generated as part of performance of the method of Figure 9.

Figure 11 shows an example of a compose-message dialogue box and a profile dialogue box that can be generated as part of performance of the part of the method of Figure 9.

Figure 12 shows a flow chart depicting another method for managing messages.

Figure 13 shows a flow chart depicting another method for managing messages.

Figure 14 shows an example of a compose-message dialogue box and a profile dialogue box that can be generated as part of performance of the part of the method of Figure 13.

Figure 15 shows another example of a compose-message dialogue box and a profile dialogue box that can be generated as part of performance of the part of the method of Figure 13.

Figure 16 shows a variant on the system of Figure 3.

Figure 17 shows another example of a compose-message dialogue box and a profile dialogue box that can be generated as part of performance of the part of the method of Figure 13.

### DETAILED DESCRIPTION OF THE EMBODIMENTS

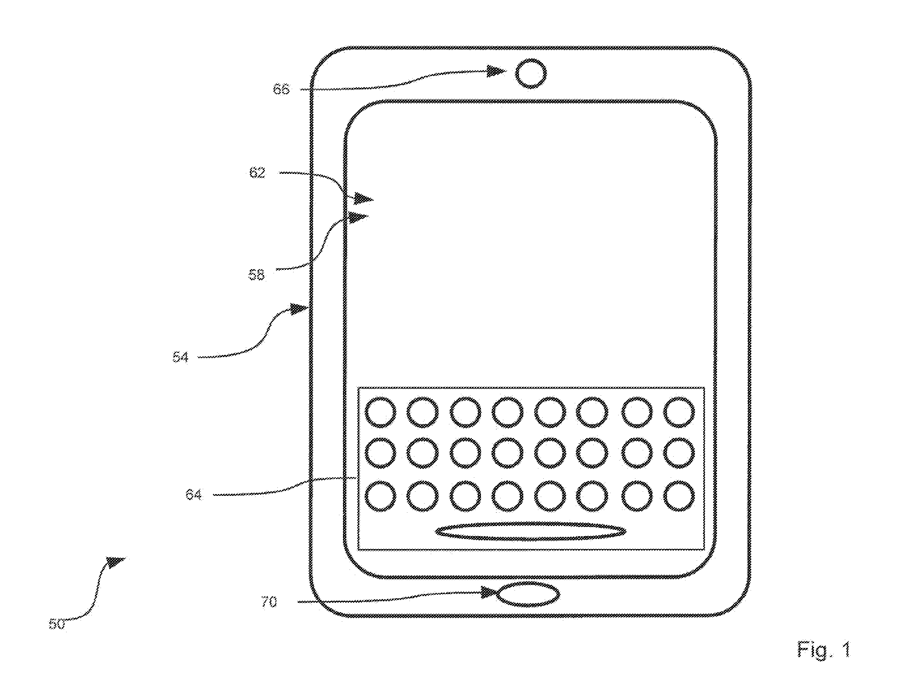

Figure 1 a schematic representation of a non-limiting example of a portable electronic device 50 which can be used for communicating messages with similar devices, as discussed in greater detail below. It is to be understood that portable electronic device 50 is an example, and it will be apparent to those skilled in the art that a variety of different portable electronic device structures are contemplated. Indeed variations on portable electronic device 50 can include, without limitation, a cellular telephone, a portable email paging device, a camera, a portable music player, a video player, a personal digital assistant, a portable book reader, a video game player, a tablet computer, a netbook computer, or a laptop computer. Other contemplated variations include devices which are not necessarily portable, such as desktop computers.

Referring to Figure 1, device 50 comprises a chassis 54 that supports a display 58. Display 58 can comprise one or more light emitters such as an array of light emitting diodes (LED), liquid crystals, plasma cells, or organic light emitting diodes (OLED). Other types of light emitters are contemplated. A touch-sensitive membrane 62 is overlaid on display 58 to thereby provide an input device for device 50. As a non-limiting example, device 50 can be configured to selectively show or hide a virtual keyboard 64. A microphone 70 is also provided, but is optional. Other types of input devices, other than touch membrane 62 or microphone 70, or in addition to touch membrane 62 or microphone 70, are contemplated. For example, a physical keyboard, or touch-pad, or joystick or trackball or track-wheel, or optical camera or any one or more of them can be provided, in addition to or in lieu of touch membrane 62. Such other components may, if desired, be "slide-out" or folded out components, or peripherals that attach to device 50. In a present implementation, device 50 also comprises a speaker 66 for generating audio output. Speaker 66 may be implemented as, or augmented with, a wired or wireless headset or both. However, speaker 66 is optional.

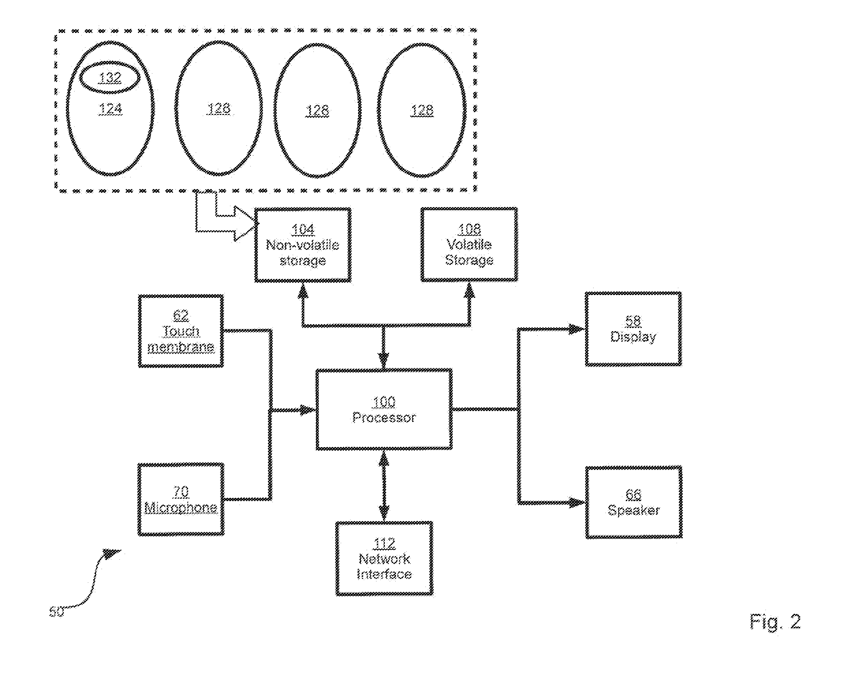

Figure 2 shows a schematic block diagram of the electronic components of device 50. It should be emphasized that the structure in Figure 2 is a non-limiting example. Device 50 includes at least one input device which in a present embodiment includes touch membrane 62. As noted above, other input devices are contemplated. Input from touch membrane 62 is received at a processor 100. In variations, processor 100 may be implemented as a plurality of processors, or as a multi-core processor. Processor 100 can be configured to execute different programming instructions that can be responsive to the input received via the one or more input devices. To fulfill its programming functions, processor 100 is also configured to communicate with at least one non-volatile storage unit 104 (e.g. Eraseable Electronic Programmable Read Only Memory ("EEPROM"), Flash Memory) and at least one volatile storage unit 108 (e.g. random access memory ("RAM")). Programming instructions that implement the functional teachings of device 50 as described herein are typically maintained, persistently, in non-volatile storage unit 104 and used by processor 100 which makes appropriate utilization of volatile storage 108 during the execution of such programming instructions.

Processor 100 in turn is also configured to control display 58 and speaker 66 and any other output devices that may be provided in device 50, also in accordance with different programming instructions and responsive to different input received from the various input devices.

Processor 100 also connects to a network interface 112, which can be implemented in a present embodiment as a radio configured to communicate over a wireless link, although in variants device 50 can also include a network interface for communicating over a wired link. Network interface 112 can thus be generalized as a further input/output device that can be utilized by processor 100 to fulfill various programming instructions. It will be understood that interface 112 is configured to correspond with the network architecture that defines such a link. Present, commonly employed network architectures for such a link include, but are not limited to, Global System for Mobile communication ("GSM"), General Packet Relay Service ("GPRS"), Enhanced Data Rates for GSM Evolution ("EDGE"), 3G, High Speed Packet Access ("HSPA"), Code Division Multiple Access ("CDMA"), Evolution-Data Optimized ("EVDO"), Institute of Electrical and Electronic Engineers (IEEE) standard 802.11, Bluetooth^{™} or any of their variants or successors. It is also contemplated each network interface 112 can include multiple radios to accommodate the different protocols that may be used to simultaneously or individually communicate over different types of links.

As will become apparent further below, device 50 can be implemented with different configurations than described, omitting certain input devices or including extra input devices, and likewise omitting certain output devices or including extra input devices.

In a present embodiment, device 50 is also configured to maintain, within non-volatile storage 104, a messaging application 124 and optionally, one or more additional applications 128. Messaging application 124 and the one or more additional applications 128 can be prestored in non-volatile storage 104 upon manufacture of device 50, or downloaded via network interface 112 and saved on non-volatile storage 104 at any time subsequent to manufacture of device 50. As will be explained further below, messaging application 124 also comprises a communication management engine 132 and can be used to interact with other devices that are also configured to execute their own version of messaging application 124. Such other devices may be identical to, or variations of device 50, as discussed above. Messaging application 124 can also be implemented as an email application, a text messaging application, an instant messaging application, or a messaging service within a social media application, such as Facebook^{™}, Twitter^{™}.

Processor 100 is configured to execute messaging application 124, accessing non-volatile storage 104 and volatile storage 108 as needed. Messaging application 124 includes the functionality to create, edit, delete and otherwise manages messages on device 50 making appropriate use of display 58 or both of them. As used herein, the term "message" is not particularly limited, and in the present illustrative implementation specifically contemplates emails, text messages, documents or the like.

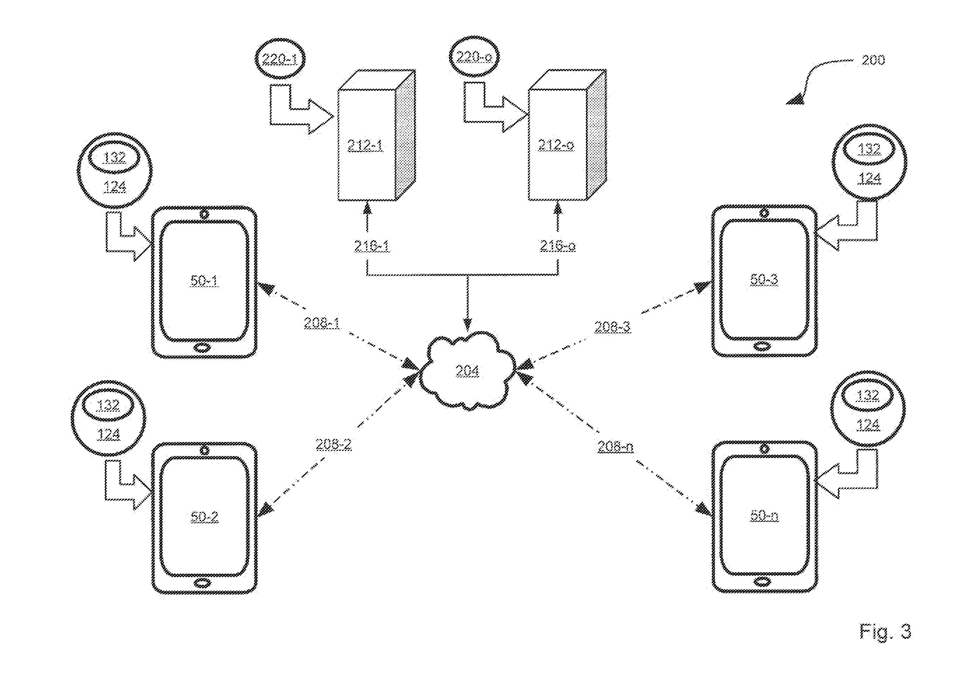

Referring now to Figure 3, a messaging system for is indicated generally at 200. System 200 comprises a plurality of devices 50-1, 50-2, 50-3 ... 50-n. (Collectively, devices 50 and generically, device 50. This nomenclature is used elsewhere herein.) For illustrative simplicity, each device 50 is shown as identical to device 50 as described above, but each device may have a different configuration from the other. While each device includes messaging application 124, it is not necessary that each device also include communication management engine 132, although at least one device includes communication management engine 132.

Devices 50 each connect to a network 204 via a respective link 208. Network 204 may comprise the Internet or any other type of network topology that enables communications between devices 50. Likewise, each link 208 can comprise any combination of hardware (e.g. various combinations of cabling, antennas, wireless base stations, intermediation servers, routers, etc.) and overlaid communication protocols to enable the connection between a respective device 50 and network 204.

System 200 also comprises at least one server 212-1 ... 212-o, which also connects to network 204 via respective links 216. Each server 212 can be implemented on physical hardware, or can be implemented in a cloud-computing context as a virtual server. In any event, those skilled in the art will appreciate that an underlying configuration of interconnected processor(s), non-volatile storage, volatile storage and network interface(s) are used to implement each server 212. Each server 212 is configured to execute message server application 220. Each message server application 220 can be based on similar or different underlying message servers that correspond to the type of messaging application 124. For example, where messaging application 124 is based on email, then message server application 220 can be based on an email server application (e.g. Microsoft Exchange) or a webmail server application (e.g. Gmail). As another example, where messaging application 124 is based on a social networking application such as Facebook, then message server application 220 can be based on the Facebook server applications. While message server application 220 is contemplated to be executing on a server 212 that is separate from any of the devices 50, in variations it is contemplated that messaging application 124 could be structured as a purely peer-to-peer type application and therefore any relevant functionality of message server application 220 could be implemented in one or more of the devices 50 and thereby obviate servers 212 altogether.

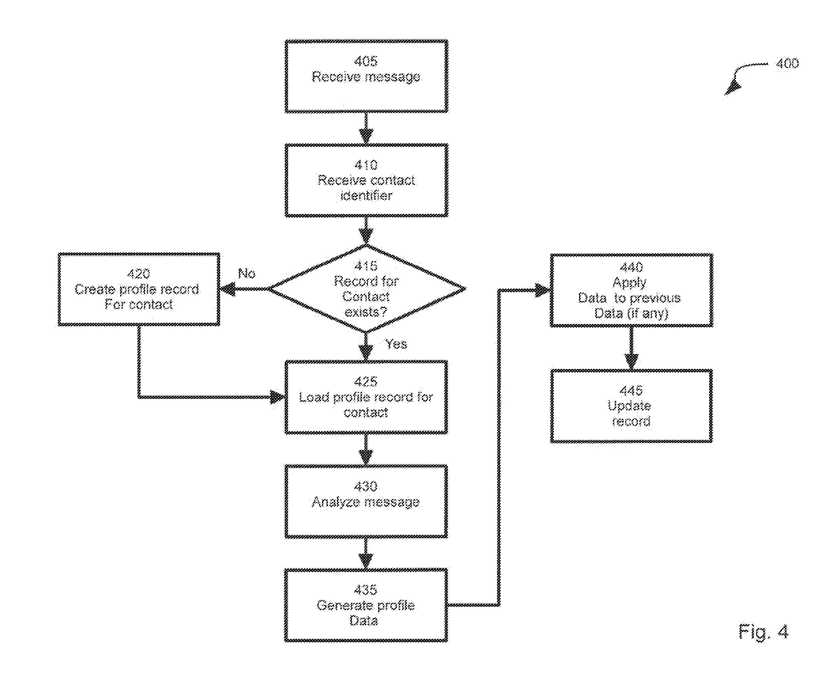

Referring now to Figure 4, a flowchart depicting a method for performing message analytics is indicated generally at 400. Method 400 is one way in which a portion of communication management engine 132, working in conjunction with messaging application 124, can be implemented. It is to be emphasized, however, that method 400 and need not be performed in the exact sequence as shown; hence the elements of method 400 are referred to herein as "blocks" rather than "steps". It is also to be understood, however, that method 400 can be implemented on variations of system 200 as well.

Method 400 can be implemented on any communication management engine 132 of system 200. It should be noted that method 400 can be performed in parallel on one or more devices 50 in relation to various messages received at various devices.

In a present implementation, method 400 contemplates establishing one of the devices 50 as a reference device, with one more of the remaining devices being defined as related devices. It will become apparent, however, that method 400 can be performed in multiple instances, each with a different device being selected as the reference device. For ease of illustration, in the following discussion it will be assumed that device 50-1 is the reference device, and therefore it is also assumed that method 400 is executing as part of the communication management engine 132 on device 50-1.

Block 405 thus comprises receiving a message. For ease of illustration, it is assumed that device 50-1 receives a message from device 50-2, but it is to be understood that this illustration is a non-limiting example.

Block 410 comprises receiving a contact identifier. The means by which the contact identifier is defined is not particularly limited, but it is generally contemplated that the contact identifier is inherently available within a header or other identifiable section of the message received at block 405. Example contact identifiers may comprise an absolute identifier for another device 50, such as an International Mobile Equipment Identity (IMEI), or a PIN number in the context of a BlackBerry^{™} hand-held device, or a static Internet Protocol (IP) address. Other example contact identifiers include relative identifiers that ultimately point to an absolute identifier of another device 50 (e.g. an email address, an International Mobile Subscriber Identity (IMSI) or a Mobile Subscriber Integrated Services Digital Network Number (MSISDN), a "friend" identifier in a social networking application such as Facebook^{™}, or a dynamic IP address. Other types of identifiers will now occur to those skilled in the art.

Block 415 comprises determining if a record exists for the contact identifier from identified at block 410. A "no" determination leads to block 420 at which point a profile record for the contact is created in non-volatile storage (e.g. non-volatile storage 104), and then to block 425. A "yes" determination leads directly to block 425 at which point an existing profile record for the contact is loaded from non-volatile storage (e.g. non-volatile storage 104) for further processing (e.g. into processor 100 and volatile storage 108). Where block 425 is reached from block 420, then the profile record will be empty, but where block 425 is reached from block 415, then the record may contain previously stored profile data.

Block 430 comprises analyzing the message received at block 405 and block 435 comprises generating profile data based on the analysis from block 430. Various means to implement block 430 and block 435 are contemplated and will be discussed in greater detail below. Block 440 comprises applying the data from block 435 to any previously stored profile data, and block 445 comprises updating the profile record that was loaded at block 425.

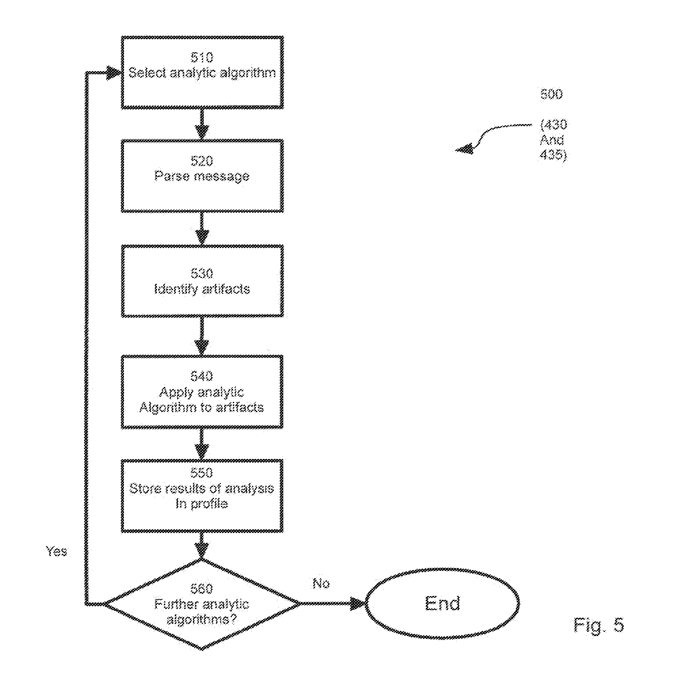

Turning now to Figure 5, method 500 shows a non-limiting example of how block 430 and block 435 can be implemented. Block 510 comprises selecting an analytic algorithm. Present, non-limiting example types of analytic algorithms include language, message length, word length, character length, sentence length, grammar usage, punctuation usage, character-style, formality, number of messages in a thread, distribution list, and psychometrics. A plurality of different algorithms can be available for each of these types of analytic algorithms.

Block 520 comprises parsing the received message. The parsing is done according to the selected analytic algorithm, in order to break the message into a number of discrete elements. Block 530 comprises identifying artifacts. The artifact identification can be based on matching expected artifacts that are uniquely identifiable based on the individual elements that are obtained from the parsing. Block 540 comprises applying the analytic algorithm to the artifacts identified at block 540. Block 550 comprises storing the results of the analytics in a profile. Block 560 comprises determining if there are further analytic algorithms that can be applied to the received message. A "yes" determination at block 560 lead back to block 510 at which point another analytic algorithm is selected and the remainder of method 500 is performed again for that newly selected analytic algorithm. A "no" determination at block 560 leads to the end of method 500.

An example language analytic algorithm thus contemplates, at block 520, parsing the message into words, by scanning the message for spaces and then, as part of block 530, storing the text between a pair of spaces to a memory location. Block 540 then comprises comparing each of the words to a predefined language dictionary. Typically a threshold plurality of the words will correspond to a single major language, and thus the results of that identified language will be stored at block 550. In this manner, the preferred language of a given contact can be identified and associated with a profile for that contact. By the same token, if the contact is conversant in a plurality of languages, then such capability can also be stored in a profile for that contact.

An example message length algorithm thus contemplates, at block 520, parsing the message into words by scanning the message for spaces and then, as part of block 530, storing the text between a pair of spaces to a memory location. Block 540 then comprises counting the number of words in the message, and block 550 comprises storing that number in the profile. When the results of method 500 are returned back to method 400, then at block 440 any previously-stored number of words for other messages can be used to derive an average number of words that are associated with messages from the particular contact.

The example message length algorithm as described above can likewise be modified for word length algorithm, character length algorithm, and sentence length algorithms. Individually, or collectively, the message length algorithm, word length algorithm, character length algorithm, and sentence length algorithm can be used to identify a preferred message complexity profile for a given contact.

An example grammar usage algorithm contemplates, based on an identified language, a degree to which the message adheres to rules of grammar for the identified language. The parsing at block 520 and artifact identification at block 530 can thus contemplate having a plurality of artifact identifications, including the identification of sentence, word and paragraph artifacts. The analytic algorithm at block 540 can thus comprise an detection of the correct application of one or more rules of grammar. One detection comprises a check for verbnoun agreement. E.g. Where the subject "I" is used and the verb "to be" is being used, then the analytic algorithm will check that "I am" is being used rather than, for example "I are" or "I is". Another detection comprises a check for consistent usage of verb tenses. For example, consistent usage would be determined to exist between the following two sentences: "I went to the store and bought some milk. Afterwards, I returned home." However example, inconsistent usage would be determined in the following: "I went to the store and bought some milk. Afterwards, I have returned home." The grammar usage algorithm can overall make a determination as to the degree to which the message adheres to rules of grammar, and an average rating of such can be applied at block 440. The grammar usage algorithm can also identify preferred verb tenses (e.g. present tense vs past tense), that are commonly used by the contact.

A related algorithm to the grammar algorithm is a punctuation usage algorithm. An example punctuation usage algorithm can measure a degree to which the message adheres to expected rules of punctuation. A punctuation usage algorithm can also measure a level of preference for certain types of punctuation, such as the frequency of use of commas, periods, semi-colons, colons, exclamations marks. Related to punctuation usage is the correctness or preferences for usage of capitalization, or lack of capitalization, of letters.

A character-style algorithm measures preferred font sizes, colours, features (e.g. italics, bold, underlining) that are associated with the contact.

A formality algorithm measures the degree to which the contact prefers the use of formal communication styles or informal communication styles. Formal communication styles are thus characterized by usage of proper titles (e.g. Mr., Dr.) in association with last names, the language used in sign-offs (e.g. Yours very truly). In contrast, informal communication styles are characterized by usage of first names, or nick names and lack of sign-offs in favour of nothing or mere inclusion of the first name of the contact.

A number of messages in a thread algorithm measure an average number of messages, including the originating message and replies, that are associated with the contact for a given thread. Such an algorithm thus parses the message into a plurality of sub-messages, and correlates with other messages previously received from the same contact. In this manner, a average expected number of messages for a given thread can be derived when combining method 500 with block 440

A distribution list algorithm measures the number of other contacts that are included in the message. When combined with block 440, the distribution list algorithm can profile the average number of contacts that are commonly associated with messages for a given contact. By the same token, the distribution list algorithm can also be used to ascertain commonalities between profiles of different contacts.

A psychometric algorithm measures one or more of knowledge, abilities, attitudes, or personality traits of the contact. A psychometric algorithm can be based on DiSC® http://www.discprofile.com/whatisdisc.htm, which is an acronym for Dominance, Influence, Steadiness and Conscientiousness. Another example psychometric algorithm can be based on a modification of Myers-Briggs Type Indicator assessment. Myers, Isabel Briggs with Peter B. Myers (1980, 1995). Gifts Differing: Understanding Personality Type. Mountain View, CA: Davies-Black Publishing. Another example psychometric algorithm can be based on a modification of the Gregorc style delineator by Anthony F. Gregorc, which elicits responses to a set of forty specific words. In the Gregorc style delineator, scoring responses give values for a model with two axes: a "perceptual space duality," concrete vs. abstract, and an "ordering duality," sequential vs. random and whereby the resulting quadrants are the styles, namely: Concrete Sequential; Concrete Random; Abstract Sequential; Abstract Random. (See http://gregorc.com/gregorc.html). A psychometric algorithm can be based on the Gregorc style delineator whereby the repeated usage of a particular set of words becomes associated with a particular style. Other types of psychometric algorithms are contemplated and as part of the present specification, it is contemplated that one or more particular psychometric algorithms may be selected for communication management engine 132 as part of a configuration setting for device 50. As a further variation, a preexisting psychometric questionnaire can be circulated to contacts and thus the psychometric profile can be populated using the results of such a questionnaire. As a still further variation, the psychometric profile that was populated from responses to such a questionnaire can be validated or updated through subsequent performances of method 400 or method 500. The psychometric profile can also be automatically generated or supplemented by monitoring the behavior of the contact at the server as the contact interfaces with various applications such as internet surfing behaviors, email composition practices or other social network communication behaviors using analysis similar to those used for determining targeted advertisements for the contact.

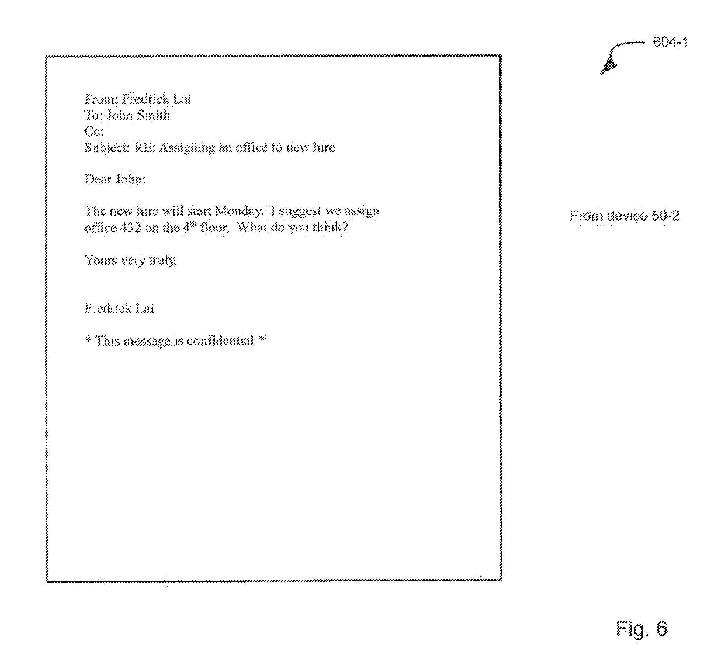

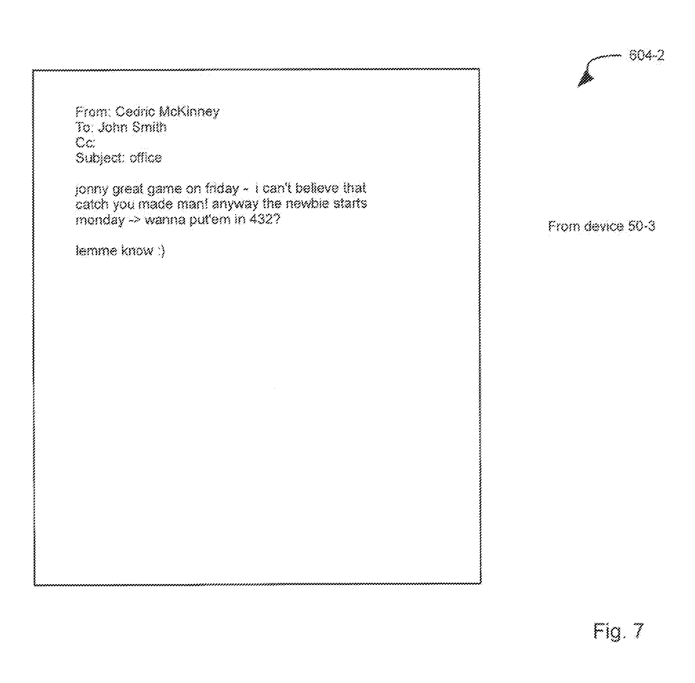

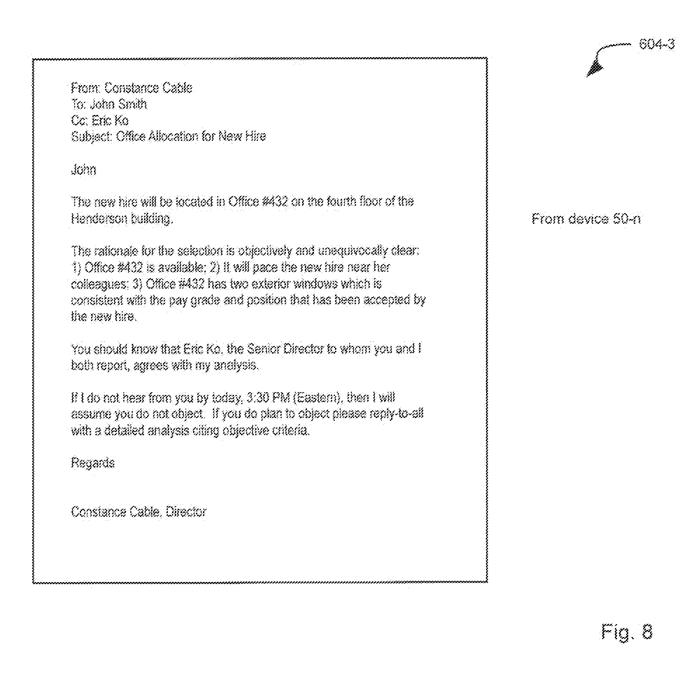

To help further illustrate method 400 and method 500, three example email messages 604 are provided respectively in Figure 6, Figure 7 and Figure 8. Message 604-1 of Figure 6 is assumed to have been received at device 50-1 from device 50-2. Message 604-2 of Figure 7 is assumed to have been received at device 50-1 from device 50-3. Message 604-3 of Figure 8 is assumed to have been received at device 50-1 from device 50-n. It is further assumed that device 50-1 performed method 400 and method 500 on each message 604. Note that each message 604 has substantially the same substance, but the specific content of each message 604 is quite different. Thus, irrespective of substance, different profiles are generated based on method 400 and method 500. Assuming that block 420 is reached (i.e. a new profile is created for each originating contact of each message 604), then Table I, Table II and Table III show the resulting profiles that can be created for each contact as a result of performing method 400 and method 500.

**Table I**

| **Profile for Device 50-2, Contact Frederick Lai Sample Size of one message (message 604-1)** | |
|---|---|
| **Analytic** | **Measurement** |
| Preferred Language | English |
| Average Message length | 31 words |
| Average word length | 5 characters |
| Average Sentence length | 6 words |
| Grammar usage | Formal |
| Punctuation usage | Formal |
| Character-style | Times new roman 12 point |
| Formality | Moderate |
| Number of messages in a thread | Zero |
| Distribution list | Zero |
| Psychometric (DiSC®) | Conscientious |

**Table II**

| **Profile for Device 50-3, Contact Cedric McKinney Sample Size of one message (message 604-2)** | |
|---|---|
| **Analytic** | **Measurement** |
| Preferred Language | English |
| Average Message length | 31 words |
| Average word length | 7 characters |
| Average Sentence length | 11 words |
| Grammar usage | Very informal |
| Punctuation usage | Very informal |
| Character-style | Arial 10 point |
| Formality | Low |
| Number of messages in a thread | Zero |
| Distribution list | Zero |
| Psychometric (DiSC®) | Steadiness |

**Table III**

| **Profile for Device 50-n, Contact Constance Cable Sample Size of one message (message 604-3)** | |
|---|---|
| **Analytic** | **Measurement** |
| Preferred Language | English |
| Average Message length | 103 words |
| Average word length | 8 characters |
| Average Sentence length | 16 words |
| Grammar usage | Highly formal |
| Punctuation usage | Highly informal |
| Character-style | Arial Narrow 10 point |
| Formality | High |
| Number of messages in a thread | Zero |
| Distribution list | One |
| Psychometric (DiSC®) | Dominant |

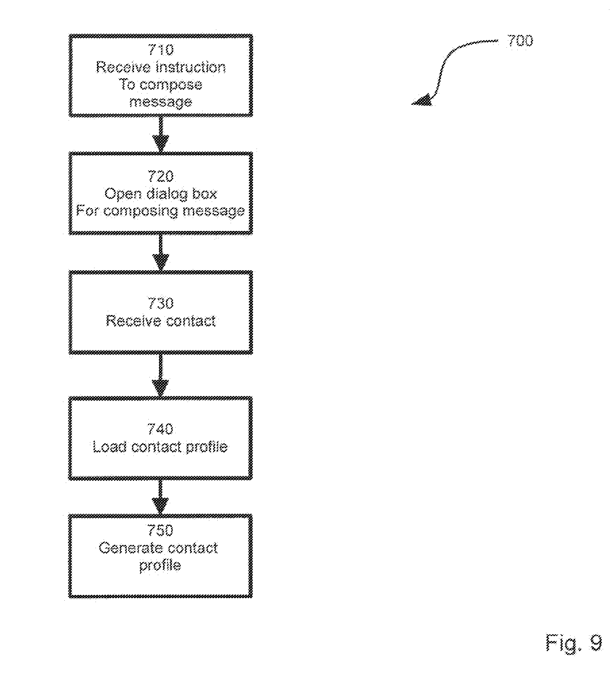

Having performed method 400, the resulting profiles can then be subsequently utilized in a variety of different ways. Various non-limiting examples of ways such profiles can be used will now be discussed. Referring now to Figure 9, a method for managing messages is shown in the form of a flow-chart and indicated generally at 700. Method 700 contemplates that method 400 or method 500 or a variant thereon has been performed, such that contact profiles already exist. Block 710 comprises receiving an instruction to compose a message. Block 710 can be part of messaging application 124. Accordingly, if messaging application 124 is an email messaging application, then block 710 can be implemented using a compose message dialogue box. Accordingly, block 710 contemplates the invocation of a compose message dialogue box. Block 730 comprises receiving a contact. The contact at received at block 730 will correspond to at least one contact to whom the message is to be sent. Again, performance of block 730 can be part of messaging application 124.

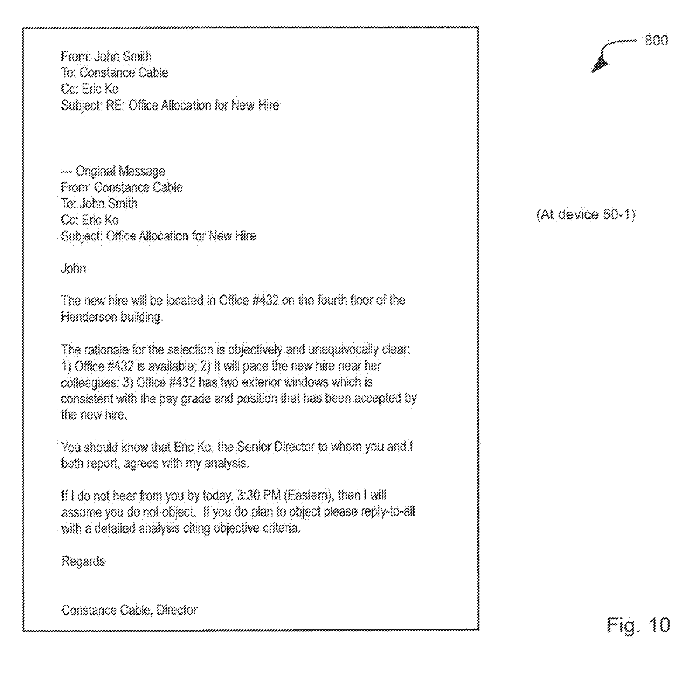

Performance of block 720 and block 730 is represented in Figure 10, where a compose-message dialogue box 800 is shown. In dialogue box 800, the contents reflect the initial populating of dialogue box 800 in response to receipt of a "reply" command invoked from reading message 604-3 of Figure 8. Accordingly, the contact "Constance Cable" is automatically entered into the "To" field of dialogue box 800, as part of the performance of the "reply" command.

Block 740 comprises loading the contact profile. The contact profile, as discussed earlier, contemplated at block 740 can correspond to a contact profile that was previously updated at block 445 of method 400.

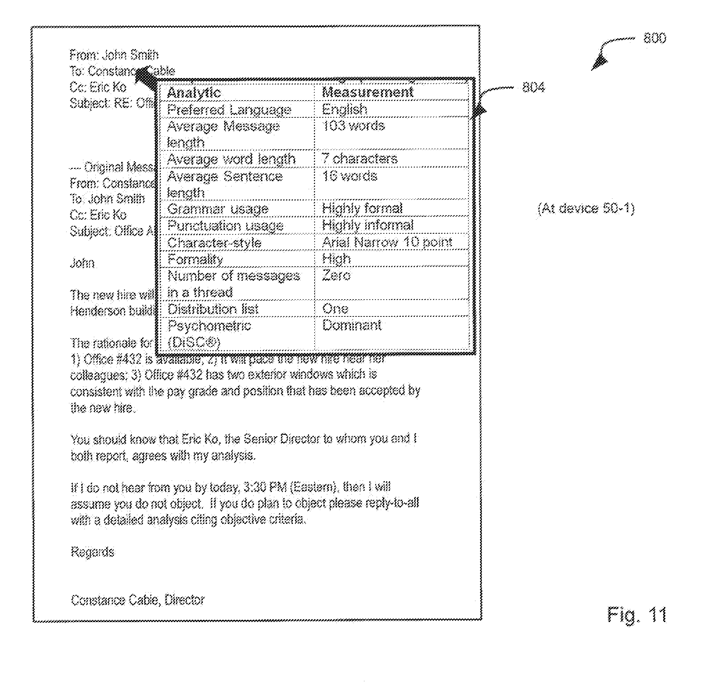

Block 750 comprises generating the contact profile. The means by which block 750 is effected is also not particularly limited. In one contemplated implementation, block 750 is performed when a cursor or other pointer is "hovered" over the name of the contact in the "To" field. This contemplated implementation is represented in Figure 11, whereby a profile dialogue box 804 is shown as overlaid on dialogue box 800 in response to the hovering of the cursor over the name "Constance Cable" in the message compose dialogue box 800. The profile dialogue box 804 is generated and reproduces the contents of Table III. The data in profile dialogue box 804 can be used to compose the contents of the message.

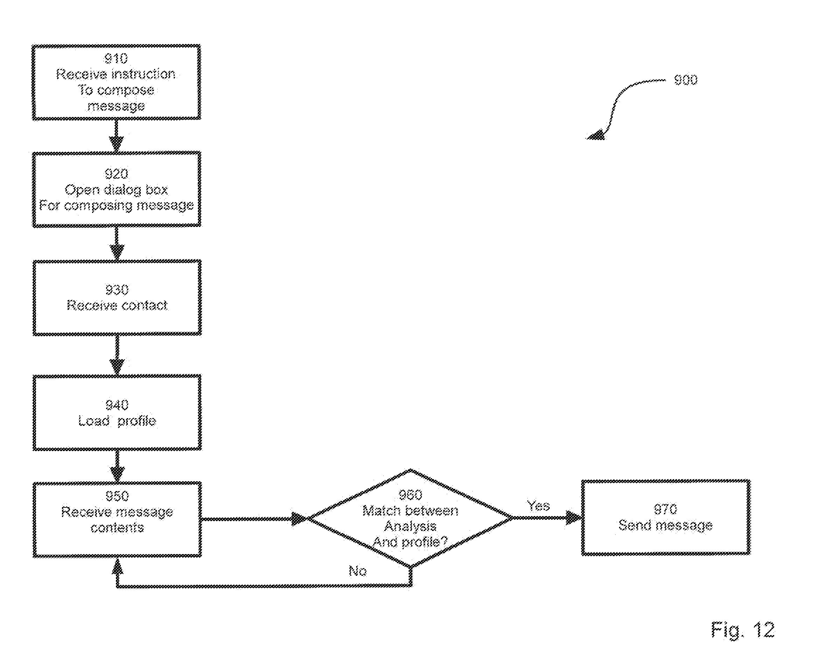

Referring now to Figure 12, another method for managing messages is indicated generally at 900. Method 900 is a variant on method 700, but includes even further automation. According to method 900, block 910 corresponds to block 710; block 920 corresponds to block 720; block 930 corresponds to block 730; and block 940 corresponds to block 740. However, in method 900, at block 950 proposed contents of the message are actually received from the composer of the message. Block 960 comprises determining if there is a match, either partial or complete, between an analysis of the content received at block 950 and the profile loaded at block 940. The analysis performed at block 960 can be based on a suitable variation of method 400 applied against the contents received at block 950. A metric can then be defined to check for a partial or complete correspondence between the contents from block 950 and the expected profile. For example, a positive match, leading a to a "yes" determination can be made at block 960 if the level of grammar, punctuation style, and formality have the same metrics as found in the corresponding profile. A "no" determination can be reached if no such correspondence is found, returning method 900 back to block 950. As part of the return from block 960 to block 950, dialogue box 804 can be generated to indicate general changes that are needed to the received content to achieve a "yes" match at block 960. As will be discussed in greater detail below, the return from block 960 to block 950 can also include an automated function whereby specific modifications to the actual parsed content from block 950 are proposed, much like a grammar-check feature currently offered in various word processor packages. Of note however is that the lack of match at block 960 could occur due to the content received at block 950 being "too formal", or "too grammatically correct" due to the fact that the contact profile suggests a low level of formality is expected than was actually received in the message at block 950. While not shown, method 900 can include an override whereby block 970 is reached in order to cause the message to be sent, without the determination at block 960.

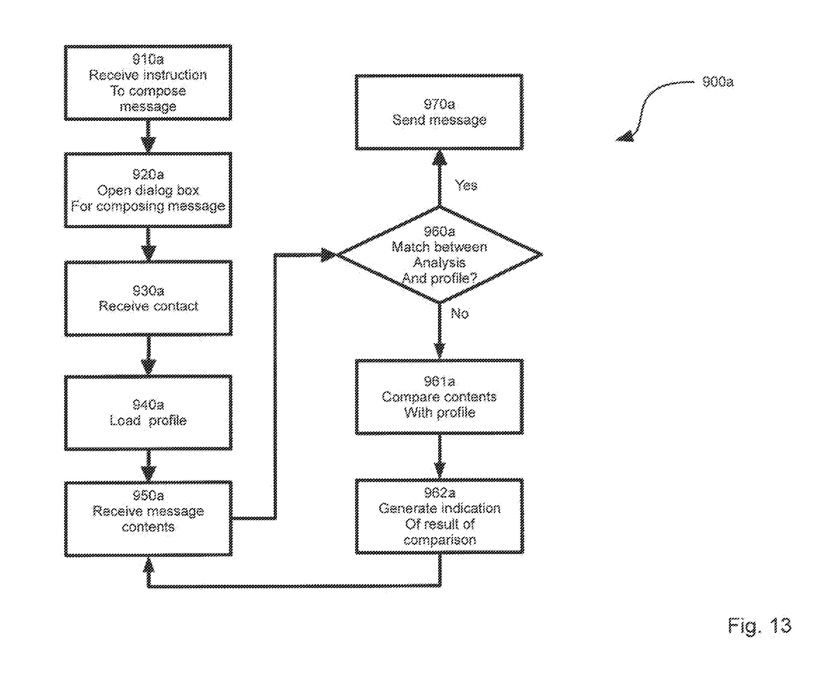

Referring now to Figure 13, a variation on method 900 is shown as method 900a. Like blocks in method 900a bear like references to their counterparts in method 900, except followed by the suffix "a". Of note is that in method 900a, two extra blocks are provided between block 960a and block 950a. More specifically, block 961 a and block 962a are provided with propose specific modifications to the actual parsed content from block 950a. Block 961 a thus comprises comparing the contents received at block 950a with the profile loaded at block 940a. Block 961 a thus contemplates a variation of method 400 being performed on the content received at block 950a whereby a message profile is created for the message received at block 950a. Also as part of block 961 a, a comparison is made between the profile data created for the message received at block 950a and the profile that was loaded at block 940a.

Block 962a comprises generating an indication as to the results of the comparison at block 961 a. Such an indication can comprise a suggestion for actual modifications that could be made to bring the message profile into greater harmony with the profile. The indication can alternatively, or in addition, comprise an indication of a degree of a match. For example, such an indication could indicate "weak match" or "moderate match" or "strong match".

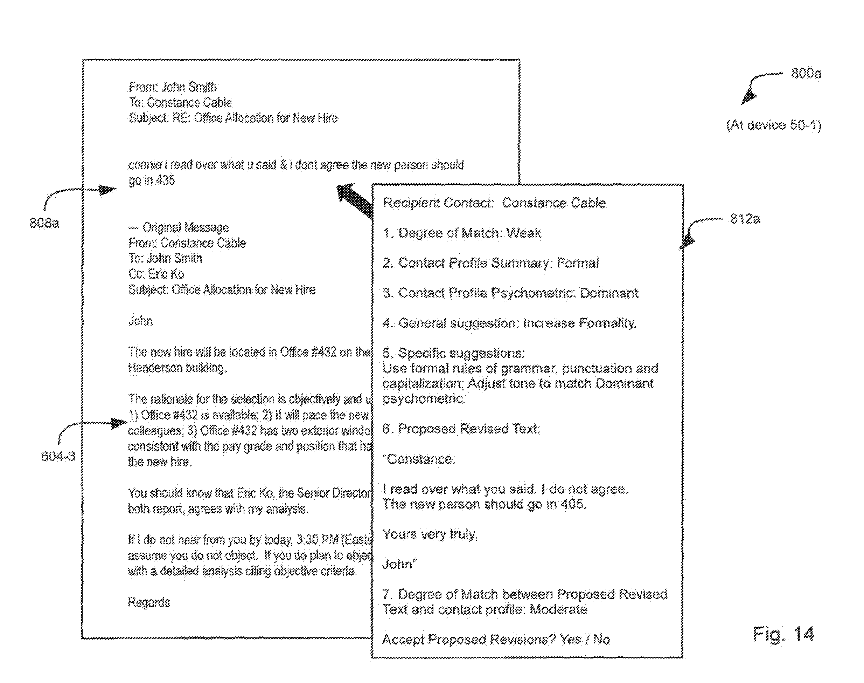

An example of how block 961 a and 962a can be implemented in shown in Figure 14. In Figure 14, dialogue box 800a comprises a draft reply message 808a which reflects a draft response to the message 604-3. Draft reply message 808a represents example content received at block 950a. Also in Figure 14, an indicator dialogue box 812a is shown as overlaid on dialogue box 800a as part of performance of block 962a as a result of performance of block 961 a. In the present, but non-limiting example of Figure 14, the indicator dialogue box 812a provides seven indicators, it being understood that fewer, or additional, or different indicators could be provided in various implementations. The first indicator shows a degree of match between the profile of message 604a and draft reply message 808a, and indicates that the degree of match is "Weak". The second indicator provides a succinct summary of the contact profile as being "Formal". The third indicator provides a summary of the contact profile's psychometric, which is identified as "Dominant". The fourth indicator provides a general suggestion for modification to the message, which is identified as "Increase Formality"; generally suggesting that the tone of the message 808a should be increased in formality. The fifth indicator expands on the fourth indicator, by providing specific suggestions, namely, to "Use formal rules of grammar, punctuation and capitalization; Adjust tone to match Dominant psychometric." The sixth indicator provides a specific set of revised text as follows:

"Constance:

I read over what you said. I do not agree.

The new person should go in 405.

Yours very truly,

John"

It can be noted that the proposed revised text in the sixth indicator applies spell checking and rules of grammar to the text in message 808a. However, it will now be understood that method 900a can be implemented to perform suggestions to decrease formality if the contact profile suggests a preference for informal communication. In this situation then the proposed text could be modified to remove capitalization, punctuation and use contractions in place of formal text (e.g. use "don't" in place of "do not").

The seventh indicator provides an indication of a degree of match between the contact profile and the proposed text shown in the sixth indicator, which in this example is "Moderate", thereby prompting input for further revisions to message 808a to urge a greater match determination at block 960a.

Dialogue box 812a also includes an interactive field whereby input can be received indicating whether or not the proposed revisions in the sixth indicator should be accepted so as to automatically replace the contents of message 808a with the contents in the sixth indicator.

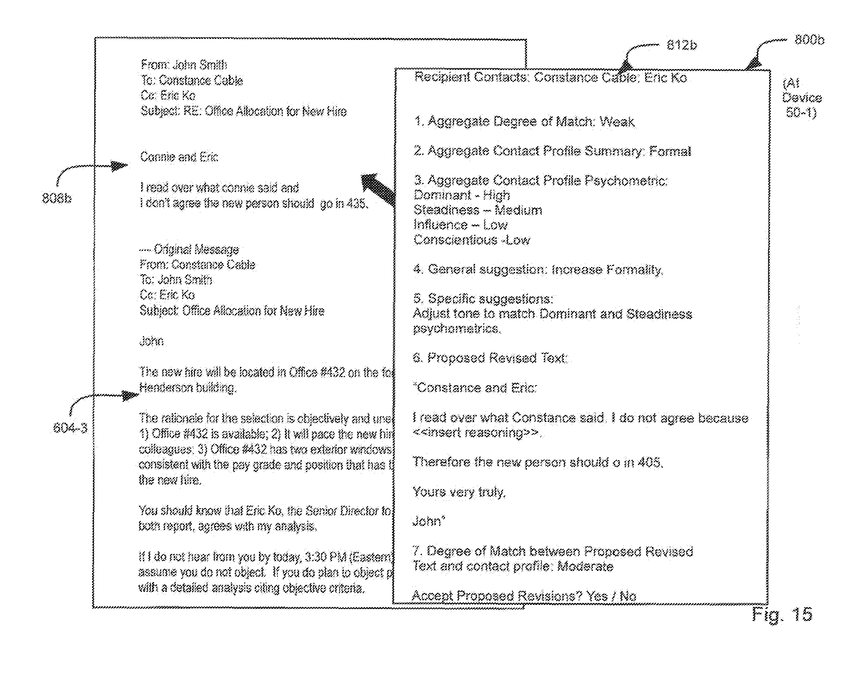

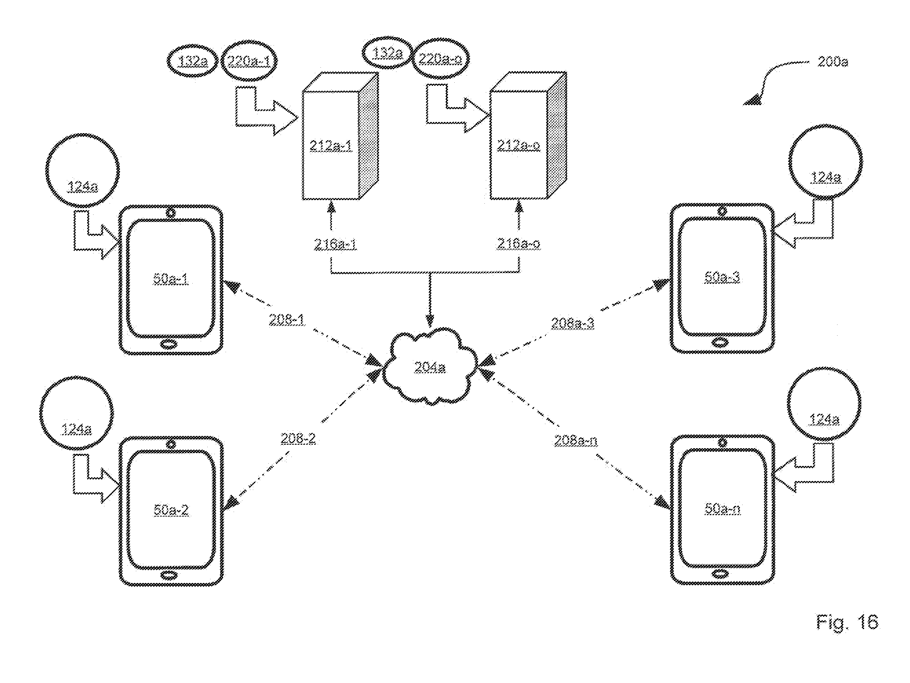

It should also be understood that dialogue box 812a can be modified to provide indicators that address the possibility of a particular message including multiple contacts. This example is shown in Figure 16, where a dialogue box 800b is provided which is a variation on dialogue box 800a. Draft reply message 808b contemplates two recipient contacts, namely Constance Cable and Eric Ko. Also in Figure 15, an indicator dialogue box 812b is shown as overlaid on dialogue box 800b as part of performance of block 962a as a result of performance of block 961 a. Indicator dialogue box 812b, in contrast to dialogue box 812a, comprises various aggregate indicators, that in the present example reflect an aggregation of the profiles for the two message recipients, namely Constance Cable and Eric Ko. The indicators in dialogue box 812b are thus substantially identical to the indicators in dialogue box 812a, except that in dialogue box 812b the indicators reflect an aggregation of the profiles for the recipient contacts. (Thus it will now be apparent to those skilled in the art that dialogue box 812b assumes that a profile exists for both Constance Cable and Eric Ko.)

In general, it is to be understood that the particular graphical interfaces used to implement the present teachings are not particularly limited, and thus contemplate a wide number of variations on the format and structure as shown in the Figures herein.

While the foregoing provides certain non-limiting example embodiments, it should be understood that combinations, subsets, and variations of the foregoing are contemplated. For example, Figure 16 shows a system 200a which is a variation on system 200. Like elements in system 200a bear like references, except followed by the suffix "a". Of note is that in system 200a, communication management engine 132a is maintained by servers 212a and thus method 400 is performed on those servers 212a. In other variations, communication management engine 132a, or variants thereon, are maintained in one or more servers 212a and maintained in one or more devices 50a. In general, method 400 or method 500 or their variants can be performed either entirely locally by either a device 50a or a server 212a, or in a more distributed fashion with portions performed on device 50a and portions performed on a server 212a.

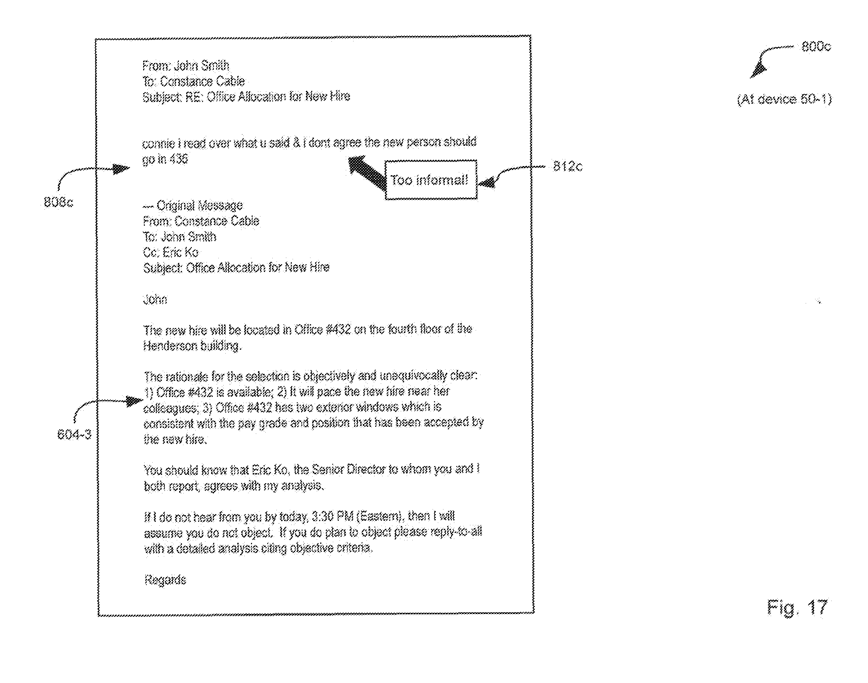

Another example of how block 961 a and 962a can be implemented in shown in Figure 17. In Figure 17, a variation of dialogue box 800a is shown and labeled as dialogue box 800c. Figure 17 thus comprises a draft reply message 808c which reflects a draft response to the message 604-3. Draft reply message 808c is substantially the same as draft reply message 808a from Figure 14. Also in Figure 17, an information bubble 812c is shown as overlaid on dialogue box 800c as part of performance of block 962c as a result of performance of block 961 a. Information bubble 812c is a variation of indicator dialogue box 812c, which provides a summary of the comparison, with the indication of "Too informal!", thereby prompting reception of a more formal version of the message 808c.

If desired, settings within device 50a can be set in order to determine which format of indicator dialogue box is provided (i.e. indicator box 812a, 812b, or 812c). Indicator box 812c can be selected in the event that the area of display 58 is constrained.

It should also be understood that various animations, fades and the like can be applied the generation of various indicator dialogue boxes such as indicator box 812a, 812b, or 812c. Other variations on the format and exact content of indicator box 812a, 812b, or 812c are contemplated.

The present specification provides a novel method, device and system for managing messages across a plurality of communication devices. It will now be apparent various advantages are provided by this specification. For example, an overall reduction in reply messages being sent can be achieved in circumstances where mismatches in message profiles and contact profiles lead to generation of reply messages seeking clarification. The technical effecting of message profile and contact profile matching before a message is sent can thus reduce the need for such reply messages and thereby reduce consumption of technological resources.

## Claims

1. A communication device configured to analyze at least a portion of a first message comprising:
a processor configured to receive a contact identifier from said message and to load a contact profile for said contact identifier;
said processor further configured to analyze said message to generate a message profile for said message and to perform a comparison of said message profile with said contact profile;
said processor further configured to generate an indication of the result of said comparison on an output device under control of said processor.

2. The communication device of claim 1 wherein said processor is further configured to receive at least one additional contact identifier from said message and to load an additional contact profile for each at least one additional contact identifier; said processor further configured to generate an aggregate contact profile based on said contact profiles, and wherein said comparing is based on said aggregate contact profile.

3. The communication device of claim 1 or claim 2 wherein said processor utilizes an analytic algorithm to analyze said message.

4. The communication device claim 3 wherein said analytic algorithm comprises at least one of language, message length, word length, character length, sentence length, grammar usage, punctuation usage, character-style, formality, number of messages in a thread, distribution list, and psychometrics.

5. The communication device of any one of claims 1-4 wherein said first message is one of an email, a text message, an instant message, or a messaging service within a social media application.

6. The communication device of any one of claims 1-5 wherein said indication comprises an indication of a degree of match resulting from said comparison.

7. The communication device of claim 6 wherein said processor is configured to refuse to send said message if said degree of match does not meet a predefined threshold.

8. The communication device of any one of claims 1-7 wherein said processor is configured to generate proposed revisions to said message based on said comparison and wherein said indication includes said proposed revisions.

9. The communication device of any one of claims 1-8 wherein said indication provides a contact profile summary.

10. The communication device of any one of claims 1-9 further comprising displaying said contact profile in conjunction with said message.

11. The communication device of any one of claims 1-10 wherein said communication device is a device destined to receive said message.

12. The communication device of any one of claims 1-10 wherein said communication device is a server configured to forward said message to a destination electronic device.

13. A method for performing message analytics upon at least a portion of a first message composed at a communication device comprising:
receiving a contact identifier from said message;
loading a contact profile for said contact identifier;
analyzing said message to generate message profile for said message;
comparing said message profile to said contact profile;
generating an indication of the result of said comparison.

14. The method of claim 13 wherein said analyzing includes utilizing an analytic algorithm that comprises at least one of language, message length, word length, character length, sentence length, grammar usage, punctuation usage, character-style, formality, number of messages in a thread, distribution list, and psychometrics.

15. A non-transitory computer readable medium for storing a plurality of programming instructions executable on a said first communication device according to claim 13 or claim 14.

## Amended claims

### Amended claims in accordance with Rule 137(2) EPC.

**1.** A communication device configured to analyze at least a portion of a message comprising:
a processor configured to receive a contact identifier from said message and to load a contact profile for said contact identifier;
said processor further configured to analyze said message to generate a message profile for said message and to perform a comparison of said message profile with said contact profile;
said processor further configured to generate an indication of the result of said comparison on an output device under control of said processor.

**2.** The communication device of claim 1 wherein said processor is further configured to receive at least one additional contact identifier from said message and to load an additional contact profile for each at least one additional contact identifier; said processor further configured to generate an aggregate contact profile based on said contact profiles, and wherein said comparing is based on said aggregate contact profile.

**3.** The communication device of claim 1 or claim 2 wherein said processor utilizes an analytic algorithm to analyze said message.

**4.** The communication device claim 3 wherein said analytic algorithm comprises at least one of language, message length, word length, sentence length, grammar usage, punctuation usage, character-style, formality, number of messages in a thread, distribution list, and psychometrics.

**5.** The communication device of any one of claims 1-4 wherein said message is one of an email, a text message, an instant message, or a messaging service within a social media application.

**6.** The communication device of any one of claims 1-5 wherein said indication comprises an indication of a degree of match resulting from said comparison.

**7.** The communication device of claim 6 wherein said processor is configured to refuse to send said message if said degree of match does not meet a predefined threshold.

**8.** The communication device of any one of claims 1-7 wherein said processor is configured to generate proposed revisions to said message based on said comparison and wherein said indication includes said proposed revisions.

**9.** The communication device of any one of claims 1-8 wherein said indication provides a contact profile summary.

**10.** The communication device of any one of claims 1-9 further comprising displaying said contact profile in conjunction with said message.

**11.** The communication device of any one of claims 1-10 wherein said communication device is a device destined to receive said message.

**12.** The communication device of any one of claims 1-10 wherein said communication device is a server configured to forward said message to a destination electronic device.

**13.** A method for performing message analytics upon at least a portion of a message composed at a communication device comprising:
receiving a contact identifier from said message;
loading a contact profile for said contact identifier;
analyzing said message to generate message profile for said message;
comparing said message profile to said contact profile;
generating an indication of the result of said comparison.

**14.** The method of claim 13 wherein said analyzing includes utilizing an analytic algorithm that comprises at least one of language, message length, word length, sentence length, grammar usage, punctuation usage, character-style, formality, number of messages in a thread, distribution list, and psychometrics.

**15.** A non-transitory computer readable medium for storing a plurality of programming instructions executable on a said communication device according to claim 13 or claim 14.
